# EUROPEAN PATENT APPLICATION

(11) **EP 2 805 611 A1**
(43) Date of publication of application: **26.11.2014**
(21) Application number: 13168665.1
(22) Date of filing: 22.05.2013
(51) Int. Cl.: A01K 5/00

(54) **A feeder for animals**

(71) Applicant: SlowFeeding DNAS AB, 574 95 Björköby (SE)
(72) Inventor: Lind, Good Ove, SE-574 95 BJÖRKÖBY (SE)
(74) Representative: Somlo, Tommy

(57) **Abstract**

The present inventive concept relates to a feeder (1) for animals comprising a volume (3) for holding hay defined by a front layer (5) and a rear layer (7). The rear layer is arranged opposite to and connected to the front layer. The front layer comprises a first meshed net (10) having meshes (12) of a first mesh size through which an animal may remove hay. The feeder also comprises a second meshed net (20) comprised in the rear layer and having meshes (22) of a second mesh size smaller than the first mesh size, thereby imposing a greater effort for the animal to remove hay through the second meshed net compared to through the first meshed net, or the feeder comprise a second meshed net arranged in front of the first meshed net thereby imposing a greater effort for the animal to remove hay through both the first and second meshed nets compared to through only the first meshed net.

## Description

### Technical field of the Invention

The invention relates to a feeder for animals, such a feeder may e.g. be a hay net or a hay bag, and may be used in e.g. stables, animal transporters, horse boxes and/or paddocks.

### Background of the Invention

Some animals, such as e.g. horses, have a congenital need to continuously feed. Therefore, a horse's digestive system is adapted to more or less continuously digest food. If the horse has access to food for only parts of the day, as could be the case e.g. when the horse is in a stable or in a horse transport, the horse's digestive system will not function properly. Moreover, the parts of the day when the horse is fed, the horse tends to eat more than it should. Such feeding patterns may result in that the horse gets gastric ulcer and/or other stomach problems.

In view of the above problems, feeders for animals as e.g. horses, have been constructed where the horse is only allowed to eat a little food at a time, but where the horse has a continuous access to the feeder.

Such a feeder may e.g. be a hay net, where the meshes of the net are made small enough for the horse to withdraw only a small amount of hay at a time.

A problem with currently available hay nets is that they are not adapted for individual animals. The animal may e.g. withdraw too much or too little hay in relation to the animal's need.

### Summary of the Invention

An object of the present inventive concept is to alleviate the drawbacks of prior art. This and other objects, which will become apparent in the following description, are accomplished by a feeder as defined in the accompanying claims.

The present inventive concept is based on the realization that a feeder may be better adapted for individual animal's feeding needs, e.g. individual horse's feeding needs, if the feeder provides for at least two different conditions to which the animal may eat from the feeder, and where the at least two conditions impose different efforts for the animal to remove hay from the feeder. Such a feeder may also be more flexible in use, and hence better adapted to feed a variety of different animals.

According to at least one aspect of the present inventive concept, a feeder for animals is provided. The feeder comprises:
a volume for holding hay defined by a front layer and a rear layer, said rear layer being arranged opposite to and connected to said front layer;
said front layer comprising a first meshed net having meshes of a first mesh size through which an animal may remove hay;
a second meshed net
   comprised in said rear layer and having meshes of a second mesh size smaller than said first mesh size thereby imposing a greater effort for the animal to remove hay through the second meshed net compared to through the first meshed net, or
   arranged in front of said first meshed net thereby imposing a greater effort for the animal to remove hay through both the first and second meshed nets compared to through only the first meshed net.

By providing a feeder from which the animal, e.g. the horse, may remove hay in a common manner imposing a particular effort, and additionally providing for a condition which imposes a greater effort for the animal to remove hay, the feeder may be better adapted for individual animal's feeding needs. Having a feeder providing for at least two ways imposing different efforts for the animal to remove hay is advantageous since a caretaker of the animal may better adapt the feeding to the individual animal's feeding needs and/or the same feeder may be used to feed animals with different feeding needs. For example, an animal may eat from the feeder in a way imposing a relative small effort for the animal to remove hay, such as e.g. through the first meshed net, and subsequently or alternatively, the animal may eat from the feeder in a way imposing a greater effort for the animal to remove hay. This may for example be useful when the caretaker wants to control how much the animal is allowed to eat at a time. The animal may e.g. eat a certain amount of hay by withdrawing hay from the feeder through one of said meshed nets imposing a relative small effort, during a first time period. In a second time period, the animal is controlled to eat from the feeder in a way imposing a greater effort for the animal to remove hay, and hence the animal may remove less hay from the feeder relative the same time of eating. Thus, the animal is allowed to eat a little food at a time, more during the first time period and less during the second time period, but the animal has a continuous access to the feeder and may eat at wish, thus allowing for the animal's digestive system to function more properly. Providing such a feeder may be advantageous if feeding of the animal is to be restricted since the animal is only allowed to eat a certain amount of food at a time, e.g. due to sickness or other diets constraints.

Another example for the caretaker to control how much the animal is allowed to eat at a time may be to let the animal, in a first time period, eat from the feeder in the way imposing a greater effort for the animal to remove hay, and then in a second time period, allow the animal to eat from the feeder in the way imposing a relative small effort for the animal to remove hay. This may be advantageous e.g. if the animal is having/recovering from a stomach problem such as gastric ulcer, and is only allowed to eat relatively little hay at start. After eating from the feeder in the way imposing a greater effort, the animal may be allowed to eat from the feeder in the way imposing a relative small effort for the animal to remove hay.

Another example for the caretaker to control how much the animal is allowed to eat at a time, may be to let the animal feed from the feeder imposing the relative small effort for the animal to remove hay, parts of the day, e.g. during daytime, and then allowing the animal to feed from the feeder imposing a greater effort for the animal to remove hay during another part of the day, e.g. during nigh time.

The condition imposing a greater effort for the animal to remove hay may be achieved by arranging the second meshed net in the rear layer of the feeder and providing the second meshed net with a mesh size which is smaller compared to the mesh size of the first meshed net. The smaller meshes of the second meshed net results in that a cross section area through which the animal may remove hay is reduced compared to a cross section area of the relative larger meshes of the first meshed net. Thus, the animal may withdraw hay from the feeder through the meshes of the first meshed net comprised in the front layer of the feeder, or through the smaller meshes of the second meshed net comprised in the rear layer of the feeder.

Another option to impose a greater effort for the animal to remove hay may be achieved by arranging the second meshed net in front of the first meshed net, and thereby forcing the animal to withdraw hay through the meshes of both the first and the second mesh nets. For example, the animal may remove hay from the feeder through the meshes of the first meshed net, where after the first meshed net is covered with the second meshed net by e.g. folding the second meshed net over the first meshed net, whereby the animal may remove hay from the feeder through the meshes of both the first and the second meshed nets. By arranging the second meshed net in front of the first meshed net, the volume holding hay may be blocked to a further extent compared to if the animal would withdraw hay from the volume only through the first meshed net. That is, the meshes of the second meshed net may obstruct parts of the meshes of the first meshed net, thereby imposing a greater effort for the animal to remove hay from the feeder. In other words, an effective mesh size, defined by the meshes of the first and the second meshed nets through which the animal may withdraw hay from the volume, is smaller compared to the meshes of the first mesh size of the first meshed net and/or the meshes of the second mesh size of the second meshed net, respectively. The effective mesh size may also be achieved by letting the meshes of the first and the second meshed nets be formed differently, e.g. by forming the meshes of the first meshed net in the shape of a square, and by forming the meshes of the second meshed net to in the shape of a diamond.

According to at least one example embodiment, with said second meshed net being arranged in front of said first meshed net, said volume defined by said front and rear layers is a first volume, wherein a second volume for holding hay is defined by said second meshed net and said first meshed net. For example, the animal may remove hay from the second volume through the meshes of the second meshed net. When at least a part of the hay held in the second volume has been removed from the feeder, the animal may remove hay from the first volume through the meshes of both the first and the second meshed nets, imposing a greater effort the animal to remove hay compared to removing hay from the second volume through only the second meshed net. This arrangement is advantageous as it provides for a feeder, which as the animal eats, imposes a greater effort for the animal to remove hay. The hay held in the second volume may be seen as a first course for the animal, and the hay held in the first volume may be seen as a second course, available for the animal after at least a part of the hay in the second volume has been removed from the feeder. In addition to, or as an alternative to, the obstructing arrangement of the meshes of the second meshed net over the meshes of the first meshed net, the distance between the first meshed net and the second meshed net may impose a greater effort for the animal to remove hay from the first volume. The distance between the first and the second meshed nets is upheld by the remaining hay in the second volume, and the distance may decrease as the remaining hay in the second volume is removed, and/or moved within, the second volume.

It should be understood that the wording "in front" as e.g. in the phrase "in front of said first meshed net" refers to a position relative some reference point, here "said first meshed net", in a direction opposite to a line of direction following a geometrical axis originating from the front layer and extending towards the rear layer of the feeder. The wording "behind" as e.g. in the phrase "behind said second meshed net", refers to a position relative some reference point, here "said second meshed net" in a direction coinciding with the line of direction following the geometrical axis originating from the front layer and extending towards the rear layer of the feeder.

It should be understood that the front layer and the rear layer are related to the definition of the first volume, and that e.g. the front layer may be located behind said second meshed net when e.g. the second meshed net is not defining the first volume.

It should be noted that the wording "defined" in relation to volumes in the feeder, as e.g. in the phrase "a volume for holding hay defined by a front layer and a rear layer" or "a second volume for holding hay is defined by said second meshed net and said first meshed net" is not limiting the feeder to not comprising further volumes. For example, the second volume defined by the first and the second meshed net may be surrounded by and/or adjacent to another volume within the feeder.

According to at least one example embodiment, with said second meshed net being arranged in front of said first meshed net, said rear layer comprises a third meshed net having meshes of a third mesh size. The third meshed net may provide for an additional way for the animal to remove hay from the feeder. Hence, the animal may remove hay from the feeder through the meshes of the first meshed net, and/or through the meshes of both the first and the second meshed nets, and/or through the meshes of third meshed net. This is advantageous, as it provides for several ways from which the animal may remove hay from the feeder.

According to at least one example embodiment, said first mesh size, said second mesh size and said third mesh size are all of the same size. Said first mesh size relates to the size of a majority of the meshes of the first meshed net, said second mesh size relates to the size of a majority of the meshes of the second meshed net, and said third mesh size relates to the size of a majority of the meshes of the third meshed net. According to at least one example embodiment at least one of said first mesh size, said second mesh size and said third mesh size is of a different size compared to any one of the other mesh sizes.

The mesh size may be defined as the distance between the centers of two vertically or horizontally adjacent meshes. The mesh size of the meshed nets may e.g. be between 1 cm and 6 cm. It should be understood that the mesh size is the size of a majority of the meshes in the meshed net and that some meshes in the meshed net may have a different mesh size than the majority of the meshes.

According to at least one example embodiment, with said second meshed net being arranged in front of said first meshed net, the feeder comprises both a second volume and a third meshed net as described above. Hereby, the feeder may provide for several ways for the animal to remove hay from the feeder, for example the animal may remove hay from the first volume through the meshes of the third meshed net or through the meshes of both the first and the second meshed nets, and the animal may remove hay from the second volume through the meshes of both the first and the third meshed nets or through the second meshed net.

According to at least one example embodiment, with said second meshed net being arranged in front of said first meshed net, said rear layer comprises a shielding portion being impenetrable to hay. Having a shielding portion being impenetrable to hay is advantageous as it provides for a way of controlling the direction in which the animal approaches the feeder. If the shielding portion is arranged in such a way that it faces the legs of the animal, the risk of the animal's hooves getting stuck will be reduced. The shielding portion does not only reduce the risk of the animal becoming stuck with its hooves, but also, due to that one portion of the feeder is impenetrable to hay, directs the interest of the animal to other portions of the feeder, such as any of the meshed nets.

Although the shielding portion does not have to cover the whole of the rear layer of the feeder, according to at least one example embodiment, said shielding portion fully covers, or substantially fully covers, said rear layer. Hereby, when the feeder is arranged in such a way that the shielding portion faces the legs of the animal, the head of the animal is bent over the feeder in order to reach the first and the second meshed nets. This is advantageous, since the animal may be fed from a vertically hanging net by keeping its neck and head in a natural posture, comparable to when the animal is fed from grazing.

According to at least one example embodiment, with said second meshed net being arranged in front of said first meshed net, said second meshed net comprises meshes of a second mesh size being different from said first mesh size. Hereby, another alternative for varying the effort for which the animal may remove hay from the feeder is presented. That is, the first and the second meshed nets do not only contribute to the greater effort of removing hay from the feeder by obstructing the cross section area through which the animal may remove hay, but also by that the mesh size of the second meshed net is different compared to the mesh size of the first meshed net.

Although, the meshes of the first and the second meshed nets may have different mesh sizes, according to at least one example embodiment, said second meshed net comprises meshes of a second mesh size being the same compared to said first mesh size. By providing a feeder where the meshes of the different meshed nets have the same size, the production of the feeder is facilitated.

According to at least one example embodiment, with said second meshed net being comprised in said rear layer, the feeder comprises a third meshed net arranged in front of said first meshed net thereby imposing a greater effort for the animal to remove hay through both the first and third meshed nets compared to through only the first meshed net.

As described above, the feeder may be provided with a second volume for holding hay, and for the example embodiment where the third meshed net is arranged in front of the first meshed net, the second volume may be defined by the third meshed net and the first meshed net.

The third meshed net may provide for an additional way for the animal to remove hay from the feeder. Hence, the animal may remove hay from the feeder through the meshes of the second meshed net, and/or through the meshes of both the first and the third meshed nets, and/or through the meshes of both the first and the second meshed net, and/or through the meshes of only the third meshed net. The latter two for when the animal is removing hay from the second volume.

According to at least one example embodiment, with said second meshed net being comprised in said rear layer, the feeder comprises a third meshed net arranged behind said second meshed net thereby imposing a greater effort for the animal to remove hay through both the second and third meshed nets compared to through only the second meshed net.

Again, the feeder may be provided with a second volume for holding hay, and for the example embodiment where the third meshed net is arranged behind the second meshed net, the second volume is defined by the third meshed net and the second meshed net.

For the example embodiment where the third meshed net is arranged behind the second meshed net, the animal may remove hay from the feeder through the meshes of the first meshed net, and/or through the meshes of both the first and the second meshed nets, and/or through the meshes of both the second and the third meshed nets, and/or through the meshes of only the third meshed net. The latter two for when the animal is removing hay from the second volume.

According to at least one example embodiment, with said second meshed net being comprised in said rear layer, the feeder comprises a third meshed net arranged between said front and rear layer. The third meshed net thereby divides the volume for holding hay into two sub volumes, where a first sub volume, defined by the first and the third meshed nets, may be reached through the meshes of the first meshed net or through the meshes of both the second and the third meshed nets, and where a second sub volume, defined by the second and the third meshed nets, may be reached through the meshes of the second meshed net or through the meshes of both the first and the third meshed nets.

According to at least one example embodiment where the feeder comprises a third meshed net, said first meshed net, said second meshed net and said third meshed net are all interconnected. Volumes for holding hay, such as said first and said second volume, or said first and second sub volumes, may thus be provided between the meshed nets without introducing any further layers/meshed nets in the feeder. The volumes, such as the first volume and the second volume as previously defined, may contain different types of food, such as e.g. different types of hay, one volume containing hay and one containing e.g. oats.

According to at least one example embodiment, a maximum number of meshed nets comprised in the feeder are three. Hence, according to this embodiment, no fourth meshed net is comprised in the feeder. By limiting the number of the meshed net comprised in the feeder to three, the cost of producing the feeder may be reduced and/or the production of the feeder may be facilitated.

According to at least one example embodiment, with said second meshed net being comprised in said rear layer, the feeder comprises a shielding portion impenetrable to hay arranged between said front and rear layer. Thus, the volume as defined by the front and the rear layers is divided into a first sub volume and a second sub volume. The hay in the first sub volume defined by the shielding portion and the first meshed net is thus physically separated from the hay in the second sub volume defined by the shielding portion and the second meshed net. Hereby, the feeder may be used to feed e.g. two animals with different feeding needs by letting the animals feed from the different meshed nets of the feeder, and since the two sub volumes are physically separated from each other, the animals are prevented from eating from the sub volume belonging to the other animal.

According to at least one example embodiment, the feeder comprises an opening, having a cross-sectional area through which said volume may be filled with hay, and being arranged between the front layer and the rear layer. Hereby, an easy way to fill the feeder with hay is provided. According to at least one example embodiment, each volume and/or sub volume arranged in the feeder is provided with a separate opening for filling hay to the feeder. According to at least one example embodiment, the feeder comprises one common opening for all volumes.

According to at least one example embodiment, the feeder comprises fastening means, such as e.g. a loop or a hook, for fastening the feeder to an external surface, such as e.g. a wall. Hereby, the feeder may easily by arranged in a hanging position in such a way that the animal may feed from it.

According to at least one example embodiment, the first meshed net extends over the whole front layer, or extends substantially over the whole front layer. According to at least one example embodiment, the second or the third meshed net extends over the whole rear layer, or substantially extends over the whole rear layer.

It should be understood that the word "hay" may refer to silage, ensilage, straw, halm and the like. It should be understood that the feeder may be filled with other animal food than hay, such as e.g. oats, carrots, etc.

In summary, by providing a feeder which imposes a greater effort for the animal to remove hay from the volume holding hay, compared to removing hay through solely the first meshed net, the feeder can be customized better for individual animal's feeding needs since the animal may feed from the feeder in at least two different ways.

### Brief description of the drawings

The present inventive concept will now be described in more detail, with reference to the appended drawings showing example embodiments of the inventive concept, wherein:
Fig. 1 is a perspective view illustrating a feeder according to at least one example embodiment of the inventive concept;
Fig. 2 is a perspective, partly exploded view illustrating a feeder according to at least one example embodiment of the inventive concept;
Fig. 3 is a perspective view illustrating a feeder according to at least one example embodiment of the inventive concept;
Fig. 4 is a front view illustrating a first meshed net arranged in front of a second meshed net according to at least one example embodiment of the inventive concept.

### Detailed description of the drawings

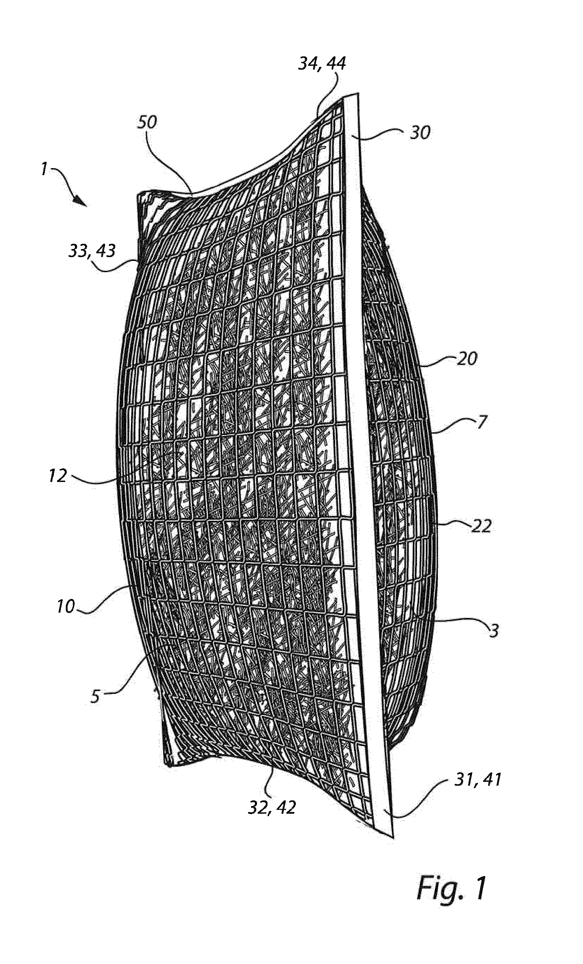

Fig. 1 illustrates a feeder 1 for animals according to at least one example embodiment of the inventive concept, where the feeder 1 is in the form of a hay net arrangement 1. The hay net arrangement 1 comprises a volume 3 defined by a front layer 5 and a rear layer 7. The front layer 5 is arranged opposite to the rear layer 7. In fig. 1, the front layer 5 comprises a first meshed net 10, and the rear layer comprises a second meshed net 20. The first meshed net 10 comprises a plurality of meshes 12 of a first mesh size, e.g. 1-6 cm, preferably 3-6 cm or 2-5 cm, and more preferably between 3-5 cm, the mesh size being the distance between two substantially parallel strings of one of the plurality of meshes 12. The second meshed net 20 comprises a plurality of meshes 22 of a second mesh size. The second mesh size is smaller than the first mesh size, e.g. at least 10 % smaller, preferably at least 30 % smaller and more preferably at least 50 % smaller.

Even though the first meshed net 10 in fig. 1 extends over the whole front layer 5 of the feeder 1, at least a portion of the front layer 5 may comprise a portion having no meshes, such as e.g. a shielding portion. Such a shielding portion may be in the form of a frame following the edges of the front layer or have a more limited extension such as from the bottom edge of the front layer to less than half way up the front layer. Even though the second meshed net 20 in fig. 1 extends over the whole rear layer 7 of the feeder 1, at least a portion of the rear layer 7 may comprise a portion having no meshes, such as e.g. a shielding portion. When referring to fig. 1 throughout this application, the phrase "the first meshed net 10" will be used analogously with the phrase "the front layer 5", and the phrase "the second meshed net 20" will be used analogously with the phrase "the rear layer 7".

As illustrated in fig. 1, the first meshed net 10 has a four-corner shape having four edges or sides 31, 32, 33, 34. Similarly, the second meshed net 20 has a four-corner shape having four sides 41, 42, 43 44. The first meshed net 10 is connected to the second meshed net 20 by that at least three of the sides 31,32, 33 of the first meshed net 10 are connected to at least three of the sides 41, 42, 43 of the second meshed net 20, arranged opposite to the sides 31, 32, 33 of the first meshed net 10. The sides 31, 41, 32, 42, 33, 43 may be connected by a welded seam 30 or by any other means. An opening 50 for filling the volume 3 with hay is provided between two of the opposite sides 34, 44 of the first and the second meshed nets 10, 20.

The use of the feeder 1 will now be described in detail.

As illustrated in fig. 1, hay is held in the volume 3 between the first meshed net 10 and the second meshed net 20. An animal may remove hay through the meshes 12 of the first meshed net 10, or through the meshes 22 of the second meshed net 20. Since the meshes 12, 22 of the two meshed nets 10, 20 have different mesh sizes, the animal may remove hay from the feeder 1 in at least two different ways. The animal may remove hay through the meshes 12 of the first meshed net 10 having a first mesh size with a relative small effort, and the animal may remove hay through the meshes 22 of the second meshed net 20 having a second mesh size smaller than the first mesh size, with a relative greater effort.

A caretaker of the animal may thus arrange the feeder to fit the needs of an individual animal. This may for example be useful when the caretaker wants to control how much the animal is allowed to eat at a time. For example, the caretaker may arrange the feeder 1 in such a way that at least one of the meshed nets 10, 20 faces a wall or a fence. Hereby, the animal may be directed to withdraw hay through the meshes 12, 22 of the feeder 1 not facing the wall or the fence. For example, in a first time period the caretaker may arrange the feeder 1 in such a way that the second meshed net 20 faces the wall or the fence. Thus, the animal may eat a certain amount of hay by withdrawing hay from the feeder 1 through the meshes 12 of the first meshed net 10 imposing a relative small effort. In a second time period, the caretaker may turn the feeder 1 so that the first meshed net 10 faces the wall or the fence, thereby controlling the animal to eat through the relative smaller meshes 22 of the second meshed net 20, imposing a greater effort for the animal to remove hay. Hence, the animal may remove less hay from the feeder 1 relative the same time of eating when eating from the second meshed net 20. Such arrangement of the feeder 1 is advantageous if feeding of the animal is to be restricted since the animal is only allowed to eat a certain amount of food at a time, e.g. due to sickness or diets constraints. For example, if the animal is recovering from a stomach problem, the caretaker may arrange the feeder 1 in such a way that animal is controlled to eat through the second meshed net 20 having the relative smaller meshes 22, imposing a greater effort for the animal to remove hay compared to removing hay through the meshes 12 of first meshed net 10, until the animal has recovered from the stomach problem. Thereafter, the caretaker may let the animal eat from the first meshed net 10.

Alternatively, or when the caretaker considers that the animal no longer needs to be controlled from which meshed net 10, 20 the animal eats, the caretaker may arrange the feeder 1 in such a way that the animal is free to choose from which meshed net 10, 20 it will remove hay. That is, the animal may either remove hay through the meshes 12 of the first meshed net 10, or through the meshes 22 of the second meshed net 20.

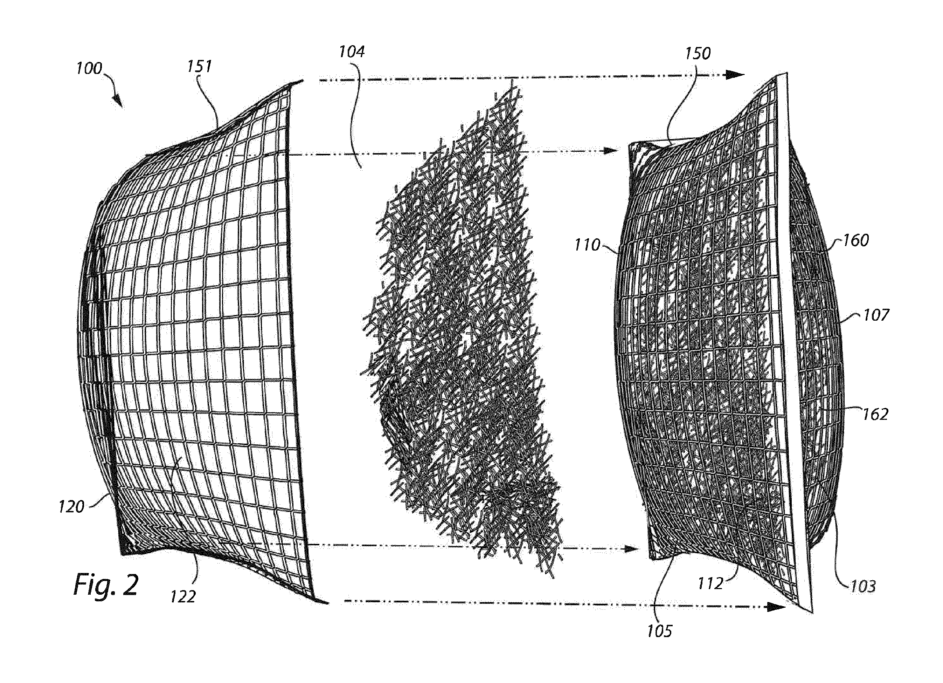

Fig. 2 illustrates a feeder 100 for animals according to at least one example embodiment of the inventive concept, where the feeder 100 is in the form of a hay net arrangement 100. The hay net arrangement 100 comprises a first volume 103 defined by a front layer 105 and a rear layer 107. The front layer 105 is arranged opposite to the rear layer 107. In fig. 2, the front layer 105 comprises a first meshed net 110. The first meshed net 110 comprises a plurality of meshes 112 of a first mesh size, e.g. 1-6 cm, preferably 3-6 cm or 2-5 cm, and more preferably between 3-5 cm, the mesh size being the distance between two substantially parallel strings of one of the plurality of meshes 112. As illustrated in fig. 2, a second meshed net 120 having meshes 122 of a second mesh size being the same or substantially the same as the first mesh size of the meshes 112 of the first meshed net 110, is arranged in front of the first meshed net 110. A second volume 104 for holding hay is defined by the second meshed net 120 and the first meshed net 110. In the exploded view in fig. 2 the volume 104 is illustrated as the space between the first meshed net 110 and the second meshed net 120.

A third meshed net 160 having meshes 162 of a third mesh size, being the same or substantially the same as the first mesh size of the meshes 112 of the first meshed net 110 and the second mesh size of the meshes 122 of the second meshed net 120, is comprised in the rear layer 107 of the feeder 100.

Similarly to fig. 1, the meshed nets 110, 120, 160 in fig. 2 each have a four-corner shape and are connected to each other along at least three of their respective sides. In fig. 2, the first meshed net 110 extends over the whole front layer 105 and the third meshed net 160 extend over the whole rear layer 107. When referring to fig. 2 throughout this application, the phrase "the first meshed net 110" will be used analogously with the phrase "the front layer 105", and the phrase "the third meshed net 160" will be used analogously with the phrase "the rear layer 107".

A first opening 150 to volume 103 is provided between two of the sides of the first and the third meshed net 110, 160, respectively and a second opening 151 to volume 104 is provided between two of the sides of the second and first meshed nets, 120, 110, respectively. A common opening for both volumes 103, 104 is also conceivable within the scope of the inventive concept.

The use of the feeder 100 will now be described in detail.

As illustrated in fig. 2, hay is held in the volume 103 between the first meshed net 110 and the third meshed net 160, and in volume 104 between the second meshed net 120 and the first meshed net 110. An animal may remove hay from the feeder 100 in at least four different ways, from the first volume 103 through the meshes 162 of the third meshed net 160 and/or through both the meshes 122 of the second meshed net 120 and the meshes 112 of the first meshed net 110, and from the second volume 104 through the meshes 122 of the second meshed net 120, and/or through both the meshes 162 of the third meshed net 160 and the meshes 112 of the first meshed net 110. If the mesh size of the meshes 112, 122, 162 of the meshed nets 110, 120, 160 are the same, as illustrated in fig. 2, the animal may remove hay from the feeder 100 with a relative small effort from the first volume 103 through the meshes 162 of the third meshed net 160 and/or from the second volume 104 through the meshes 122 of the second meshed net 120. The animal may also or additionally, remove hay from the feeder 100 with a relatively greater effort from the first volume 103 through both the meshes 122 of the second meshed net 120 and the meshes 112 of the first meshed net 110 and/or from the second volume 104 through both the meshes 162 of the third meshed net 160 and the meshes 112 of the first meshed net 110.

Similar to the feeder 1 in fig. 1, a caretaker of the animal may arrange the feeder 100 to fit the needs of an individual animal. Thus, the effects, features and advantageous described in relation to fig. 1 when providing for at least two different ways imposing at least two different efforts for the animal to remove hay, are largely analogous with the feeder 100 in fig. 2. However, the feeder 100 in fig. 2 provides for a passive use of the feeder 100 when feeding animals. For example, the third meshed net 160 may be arranged to face a wall or a fence. Thus, at first, the animal may remove hay from the second volume 104 through only the meshes 122 of second meshed net 120, with a relatively small effort. As the hay in the second volume 104 ceases, the animal is forced to eat from the first volume 103 through both the meshes 122 of the second meshed net 120 and through the meshes 112 of the first meshed net 110, with a relatively greater effort. Thus, a passive way of controlling how much hay the animal may remove over a time period is provided. It is conceivable within the scope of the present inventive concept to fill the different volumes 103, 104 with different kinds of food, e.g. different types of hay.

It should be noted that the feeder 100 may be turned inside out. For example, the first meshed net 110 may be pulled up and folded over the second meshed 120 or the third meshed net 160. Hereby, the first meshed net 110 may be arranged outside of the second meshed net 120 or the third meshed net 160. Thus, the second meshed net 120 will be arranged between the first meshed net 110 and the third meshed net 160 or the third meshed net 160 will be arranged between the first meshed net 110 and the second meshed net 120.

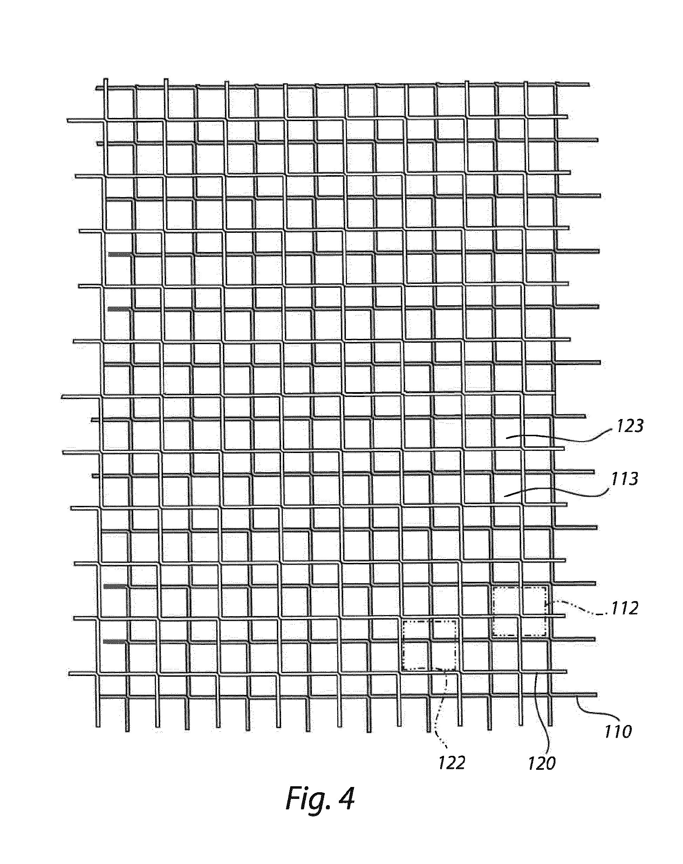

The relative greater effort needed for the animal to remove hay through the meshes 112, 122 of the first and the second meshed nets 110, 120 and/or through the meshes 112, 162 of the first and the third meshed nets 110,160, compared to only through the meshes 122 of the second meshed net and/or through only the meshes 162 of the third meshed net 160 will now be further elucidated with reference to fig. 4.

In fig. 4 two meshed nets 110, 120 are arranged in front of each other. For clarification purposes, reference is made to the first meshed net 110 and the second meshed net 120 in fig. 2 but the concept described in relation to fig. 4 is applicable for the first meshed net 110 and the third meshed net 160 as well.

As illustrated in fig. 4, the second meshed net 120 is arranged in front of the first meshed net 110, thereby the meshes 122 of the second meshed net 120 obstruct parts of the meshes 112 of the first meshed net 110. Thus, a volume holding hay arranged behind the first meshed net 110, e.g. the first volume 103 as shown in fig. 2, may be blocked to a further extent compared to by e.g. only the meshes 112 of the first meshed net 110 or the meshes 122 of the second meshed net 120. In other words, an effective mesh size 113, 123, defined by the meshes 112, 122 of the overlapping first and second meshed nets 110, 120, through which the animal may withdraw hay from the feeder, is smaller compared to the individual meshes 112 of the first mesh size of the first meshed net 110 and/or the individual meshes 122 of the second mesh size of the second meshed net 120, respectively. The effective mesh size 113, 123 may also be achieved by letting the meshes 112, 122 of the first and the second meshed nets 110, 120 be formed differently, e.g. by forming the meshes 112 of the first meshed net 110 in the shape of a square, and by forming the meshes 122 of the second meshed net 120 in the shape of a diamond.

By providing a feeder where the meshes 122 of the second meshed net 120 obstruct parts of the meshes 112 of the first meshed net 110 as described above, a greater effort is imposed for the animal to remove hay from the feeder compared to removing hay from the feeder through the meshes of only the first or the second meshed nets 110, 120. It should be noted that the second meshed net 120 arranged in front of the first meshed net 110, does not have to be displaced relative the first meshed net 110 on purpose, at least a part of the meshes 122 of the second meshed net 120 will always be displaced relative the meshes 112 of the first meshed net 110 due to the flexibility of the meshed nets 110, 120.

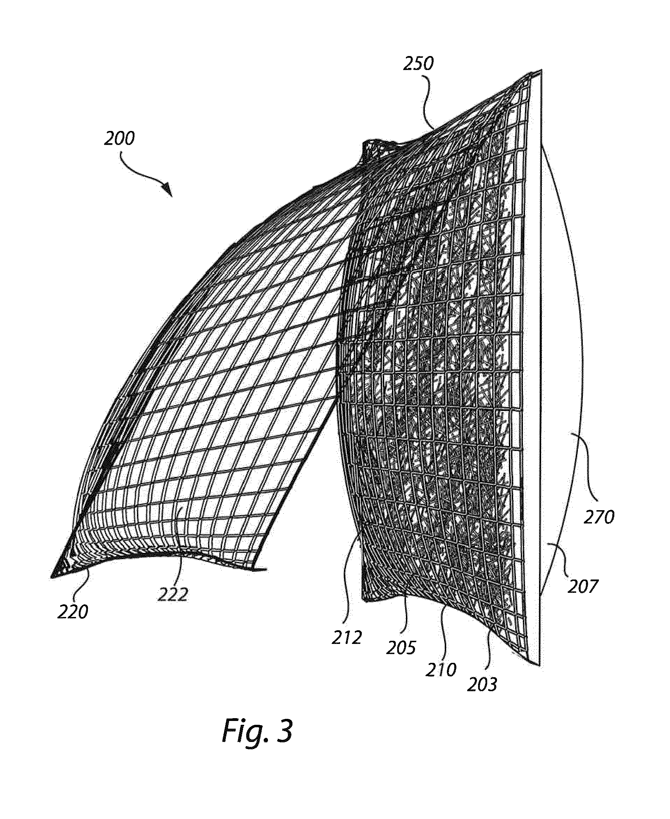

Fig. 3 illustrates a feeder 200 for animals according to at least one example embodiment of the inventive concept, where the feeder 200 is in the form of a hay net arrangement 200. The hay net arrangement 200 comprises a volume 203 defined by a front layer 205 and a rear layer 207. The front layer 205 is arranged opposite to the rear layer 207. In fig. 3, the front layer 205 comprises a first meshed net 210, and the rear layer 207 comprises a shielding portion 270 impenetrable to hay. The first meshed net 210 comprises a plurality of meshes 212 of a first mesh size, e.g. 1-6 cm, preferably 3-6 cm or 2-5 cm, and more preferably between 3-5 cm. The mesh size is the distance between two substantially parallel strings of one of the plurality of meshes 212. As illustrated in fig. 3, a second meshed net 220 having meshes 222 of a second mesh size being the same or substantially the same as the first mesh size of the meshes 212 of the first meshed net 210, is arranged in front of the first meshed net 210.

Similar to figs. 1 and 2, the meshed nets 210, 220 in fig. 3 each have a four-corner shape. The shielding portion 270 of the feeder 200 have a four-corner shape and is connected to the first meshed net 210 in at least three of their respective sides. A first opening 250 to volume 203 is provided between two of the sides of the first meshed net 210 and the shielding portion 270. The second meshed net 220 is connected to the first meshed net 210 in at least one of their respective sides, preferably at the same side of the first meshed net 210 that provides a part of the opening 250. The second meshed net 220 may easily be moved from a first position where the second meshed net 220 is arranged in front of the first meshed net 210, to a second position where the second meshed net 220 is folded over the feeder 200 and arranged behind the shielding portion 270.

The use of the feeder 200 will now be described in detail.

As illustrated in fig. 3, hay is held in the volume 203 between the first meshed net 110 and the shielding portion 270. An animal may remove hay from the feeder 100 in at least two different ways, from the volume 203 through the meshes 212 of the first meshed net 210 when the second meshed net 210 is in its second position, and/or through both the meshes 222 of the second meshed net 220 and the meshes 210 of the first meshed net 210 when the second meshed net 220 is in its first position. If the mesh size of the meshes 212, 222, of the meshed nets 210, 220 are the same, as illustrated in fig. 3, the animal may remove hay from the feeder 200 with a relative small effort from the volume 203 through the meshes 212 of the first meshed net 210. The animal may also or additionally, remove hay from the feeder 200 with a relatively greater effort from the volume 203 through both the meshes 222 of the second meshed net 220 and the meshes 212 of the first meshed net 210, as described in relation to fig. 4.

Similar to the feeder 1, 100 in figs. 1 and 2, a caretaker of the animal may arrange the feeder 200 to fit the needs of an individual animal. Thus, the effects, features and advantageous described in relation to figs. 1 and 2, when providing for at least two different ways imposing at least two different efforts for the animal to remove hay, are largely analogous with the feeder 200 in fig. 3. However, the feeder 200 in fig. 3 provides for an additional and/or alternative way to use of the feeder 200 when feeding animals.

Having a shielding portion 270 being impenetrable to hay is advantageous as it provides for a way of controlling the direction in which the animal approaches the feeder 200. If the shielding portion 207 is arranged in such a way that it faces the legs of the animal, the risk of the animal's hooves getting stuck will be reduced. The shielding portion 207 does not only reduce the risk of the animal becoming stuck with its hooves, but also, due to that one portion 207 of the feeder 200 is impenetrable to hay, directs the interest of the animal to other portions of the feeder 207, such as any of the meshed nets 210, 220.

It should be noted that all of the feeders mentioned in the application may be turned inside out. For example, for a feeder having three layers, the layer in the middle, e.g. a meshed net, may be pulled out and folded over the first or the third layer.

The person skilled in the art realizes that the present invention by no means is limited to the embodiments described above. For example, other hay net arrangement having meshed nets and/or layers such as e.g. front and rear layers, and/or shielding portions in other shapes than presented here are applicable and more shielding portions and/or more meshed nets may be used.

## Claims

1. A feeder for animals comprising:
a volume for holding hay defined by a front layer and a rear layer, said rear layer being arranged opposite to and connected to said front layer;
said front layer comprising a first meshed net having meshes of a first mesh size through which an animal may remove hay;
a second meshed net
comprised in said rear layer and having meshes of a second mesh size smaller than said first mesh size thereby imposing a greater effort for the animal to remove hay through the second meshed net compared to through the first meshed net, or
arranged in front of said first meshed net thereby imposing a greater effort for the animal to remove hay through both the first and second meshed nets compared to through only the first meshed net.

2. A feeder for animals according to claim 1, with said second meshed net being arranged in front of said first meshed net, wherein said volume defined by said front and rear layers is a first volume, and wherein a second volume for holding hay is defined by said second meshed net and said first meshed net.

3. A feeder for animals according to claim 1, with said second meshed net being arranged in front of said first meshed net, wherein said rear layer comprises a third meshed net having meshes of a third mesh size.

4. A feeder for animals according to claim 3, wherein said first mesh size, said second mesh size and said third mesh size are all of the same size.

5. A feeder for animals according to claim 1, with said second meshed net being arranged in front of said first meshed net, wherein said rear layer comprises a shielding portion being impenetrable to hay.

6. A feeder for animals according to claim 5, wherein said shielding portion fully covers, or substantially fully covers, said rear layer.

7. A feeder for animals according to claim 1, with said second meshed net being arranged in front of said first meshed net, wherein said second meshed net comprises meshes of a second mesh size being different from said first mesh size.

8. A feeder for animals according to claim 1, with said second meshed net being comprised in said rear layer, comprising a third meshed net arranged in front of said first meshed net thereby imposing a greater effort for the animal to remove hay through both the first and third meshed nets compared to through only the first meshed net.

9. A feeder for animals according to claim 1, with said second meshed net being comprised in said rear layer, comprising a third meshed net arranged behind said second meshed net thereby imposing a greater effort for the animal to remove hay through both the second and third meshed nets compared to through only the second meshed net.

10. A feeder for animals according to claim 1, with said second meshed net being comprised in said rear layer, comprising a third meshed net arranged between said front and rear layer.

11. A feeder for animals according to claim 3, 4 or 11, wherein said first meshed net, said second meshed net and said third meshed net are all interconnected.

12. A feeder for animals according to claim 1, with said second meshed net being comprised in said rear layer, comprising a shielding portion impenetrable to hay arranged between said front and rear layer.

13. A feeder for animals according to any one of the preceding claims, wherein an opening, having a cross-sectional area through which said volume may be filled with hay, is arranged between the front layer and the rear layer.

14. A feeder for animals according to any one of the preceding claims, comprising fastening means, such as e.g. a loop or a hook, for fastening the feeder to an external surface, such as e.g. a wall.
